(19) Europäisches Patentamt
European Patent Office
Office européen des brevets

(11) **EP 4 733 818 A1**

(12) **DEMANDE DE BREVET EUROPEEN**

(43) Date de publication:
**29.04.2026 Bulletin 2026/18**

(21) Numéro de dépôt: **25210454.2**

(22) Date de dépôt: **22.10.2025**

(51) Classification Internationale des Brevets (IPC):
**G02B 5/124** *(2006.01)* **G03B 21/60** *(2014.01)*

(52) Classification Coopérative des Brevets (CPC):
**G02B 5/124; G03B 21/60**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **28.10.2024 FR 2411775**

(71) Demandeur: **Commissariat à l'Energie Atomique et aux Energies Alternatives**
**75015 Paris (FR)**

(72) Inventeur: **MARTINEZ, Christophe**
**38054 GRENOBLE CEDEX 09 (FR)**

(74) Mandataire: **Santarelli**
**Tour Trinity**
**1 bis Place de la Défense**
**92400 Courbevoie (FR)**

(54) **COMPOSANT OPTIQUE PARTIELLEMENT TRANSPARENT ET PARTIELLEMENT RETROREFLECHISSANT A DEVIATION PLAN-SYMETRIQUE**

(57) L'invention porte sur un composant optique comportant une première couche (11) transparente comportant des micro-renfoncements (13) rétroréfléchissants en forme de pyramide tronquée ; et une deuxième couche (20) transparente s'étendant sur et au contact de la première couche (11) et des micro-renfoncements (13). Les micro-renfoncements (13) sont agencés en bandes rétroréfléchissantes distinctes et parallèles les unes aux autres, les bandes rétroréfléchissantes étant séparées deux à deux par une portion longitudinale transparente ne comportant pas de micro-renfoncements ; les micro-renfoncements (13) d'une même bande rétroréfléchissante étant accolés les uns aux autres et orientés suivant un axe transversal de la bande rétroréfléchissante.

[Fig.3A]

Fig.3A

EP 4 733 818 A1

**Description**

## DOMAINE TECHNIQUE

Le domaine de l'invention est celui des composants optiques partiellement transparents et partiellement rétroréfléchissants comportant des micro-renfoncements en forme de pyramide tronquée. Il trouve une application dans l'imagerie, en particulier dans l'imagerie flottante.

## ÉTAT DE LA TECHNIQUE ANTÉRIEURE

On connaît des composants optiques partiellement transparents et partiellement rétroréfléchissants. Un tel composant optique est sensiblement planaire, et comporte une première couche transparente dont une face est structurée pour former des micro-renfoncements en coin de cube. Une deuxième couche transparente peut être fixée à la face micro-structurée de la première couche au moyen d'une colle transparente. Les micro-renfoncements rétroréfléchissants sont adaptés à rétroréfléchir la lumière qui est incidente sur la deuxième couche transparente. Ils sont chacun entourés par une portion transparente pour que la lumière incidente soit transmise (avec réfraction) au travers du composant optique sans rétroréflexion.

Ce composant optique peut être utilisé comme écran d'affichage, comme par exemple dans le système d'imagerie flottante décrit dans le document WO 2018/069625 A1, ou encore comme pare-brise amélioré tel que décrit dans le document EP 3 141952 A1. Un tel composant optique est alors adapté à rétroréfléchir la lumière d'une image à afficher, et à transmettre la lumière opposée et provenant de la scène.

Notons que les micro-renfoncements rétroréfléchissants en coin de cube peuvent présenter une forme de pyramide tronquée, où le trièdre rétroréfléchissant est formé par la face sommitale de la pyramide et par deux faces latérales de celle-ci. Ces trois faces sont perpendiculaires entre elles, et la face sommitale est de plus parallèle à la base de la pyramide et avec le plan moyen du composant optique. Une telle configuration est décrite notamment dans le document WO 2021/104739 A1.

Il existe toutefois un besoin d'améliorer au moins en partie certains aspects d'un tel composant optique.

## EXPOSÉ DE L'INVENTION

L'invention a pour objectif de proposer un composant optique partiellement transparent et partiellement rétroréfléchissant configuré pour faire converger des rayons lumineux selon une symétrie planaire vis-à-vis d'un plan principal dans lequel s'étend le composant optique, et ceci avec une efficacité de transmission optimisée.

Pour cela, l'objet de l'invention est un composant optique s'étendant dans un plan principal, et présentant une face d'entrée et une face de sortie opposée, planes et parallèles au plan principal, comportant : une première couche transparente, présentant la face d'entrée, et une deuxième face opposée, plane et parallèle au plan principal, et comportant des micro-renfoncements rétroréfléchissants, en forme de pyramide tronquée, s'étendant à partir de la deuxième face ; et une deuxième couche transparente, présentant la face de sortie, et s'étendant sur et au contact de la deuxième face de la première couche et des micro-renfoncements.

Selon l'invention, les micro-renfoncements sont agencés en bandes rétroréfléchissantes distinctes et parallèles les unes aux autres, les bandes rétroréfléchissantes étant séparées deux à deux par une portion longitudinale transparente ne comportant pas de micro-renfoncements ; les micro-renfoncements d'une même bande rétroréfléchissante étant accolés les uns aux autres et orientés suivant un axe transversal de la bande rétroréfléchissante.

Certains aspects préférés mais non limitatifs de ce composant optique sont les suivants.

Les micro-renfoncements d'une même bande peuvent présenter tous les mêmes dimensions.

Les micro-renfoncements peuvent présenter chacun une face sommitale carrée de la pyramide tronquée et une base carrée, parallèle à la face sommitale et coplanaire avec la deuxième face de la première couche.

Les micro-renfoncements peuvent présenter chacun un trièdre formé de la face sommitale et de deux faces latérales orthogonales entre elles et avec la face sommitale.

Les micro-renfoncements peuvent présenter chacun une première diagonale formée d'un point commun au trièdre et au point opposé de la base, cette diagonale étant sensiblement orientée suivant l'axe transversal de la bande rétroréfléchissante.

Dans une même bande rétroréfléchissante, les micro-renfoncements peuvent être agencés périodiquement selon un pas sensiblement égal à la dimension d'une diagonale de la base orthogonale à la première diagonale.

Le composant optique peut comporter une couche réfléchissante qui recouvre la surface interne des micro-renfoncements ainsi qu'une surface intermédiaire de la deuxième face de la première couche située entre deux micro-renfoncements voisins.

Les bandes rétroréfléchissantes peuvent être rectilignes ou concentriques.

Chaque bande rétroréfléchissante peut comprendre, suivant son axe transversal, entre 2 et 15 micro-renfoncements.

La face d'entrée peut être destinée à être éclairée par un faisceau lumineux avec un angle d'incidence moyen $\alpha_0$ non nul, lequel est réfracté pour former dans un faisceau lumineux présentant un angle $\alpha_1$ non nul vis-à-vis d'un axe orthogonal au plan principal. De plus, les bandes rétroréfléchissantes peuvent être agencées les unes à côté des côtés au pas Lm, la deuxième couche présentant alors une épaisseur D ; les valeurs D et Lm étant choisies pour vérifier la relation :

$$D = \frac{Lm}{4 \times \tan \alpha_1} \bmod \frac{Lm}{2 \times \tan \alpha_1} \ .$$

Deux micro-renfoncements voisins d'une même bande rétroréfléchissante peuvent être espacés l'un de l'autre d'une distance au plus égale à cinquième de leur profondeur et de préférence au plus égale à dixième de leur profondeur.

L'invention porte également sur un système d'imagerie flottante, comportant : un composant de formation d'image, adapté à fournir une image ; et le composant optique selon l'une quelconque des caractéristiques précédentes, sa face d'entrée étant orientée vers le composant de formation d'image et disposée de manière inclinée à un axe optique de ce dernier.

Le système d'imagerie flottante peut comporter une structure absorbante située en face de la face d'entrée du composant optique de manière à recevoir les faisceaux lumineux provenant du composant de formation d'image et réfléchi par la face d'entrée.

Le composant de formation d'image peut comporter : un projecteur d'une image, comportant une source d'image et un système optique ; et un diffuseur transparent, situé dans le plan image du système optique, adapté à transmettre et diffuser l'image reçue du projecteur.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A est une vue schématique et partielle, en coupe transversale, d'un composant optique selon un exemple de l'art antérieur;

la figure 1B est une vue en perspective d'un micro-renfoncement en forme de pyramide tronquée du composant optique de la fig.1A ;

la figure 2 est une vue schématique et partielle, en coupe transversale, du composant optique de la fig.1A, illustrant l'ombre portée ;

la figure 3A est une vue schématique et partielle, en coupe transversale, d'un composant optique selon un mode de réalisation ;

la figure 3B est une vue en coupe transversale de micro-renfoncements du composant optique de la fig.3A ;

la figure 3C est une vue de dessus de micro-renfoncements du composant optique de la fig.3A ;

la figure 4A est une vue de dessus, schématique et partielle, de bandes rétroréfléchissantes d'un composant optique selon un mode de réalisation ;

la figure 4B est une vue schématique et partielle, en perspective, d'un composant optique comportant des bandes rétroréfléchissantes similaires à celles de la fig.4A ;

la figure 5A est une vue de dessus, schématique et partielle, de bandes rétroréfléchissantes d'un composant optique selon un autre mode de réalisation ;

la figure 5B est une vue schématique et partielle, en perspective, d'un composant optique comportant des bandes rétroréfléchissantes similaires à celles de la fig.5A ;

la figure 6 est une vue schématique et partielle, en coupe transversale, d'un système d'imagerie flottante comportant un composant optique selon un mode de réalisation ;

les figures 7A et 7B illustrent une dépendance angulaire d'une efficacité de rétroréflexion η dans le cas (fig.7A) d'un composant optique similaire à celui de la fig.1A et dans le cas (fig.7B) d'un composant optique similaire à celui de la fig.3A.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

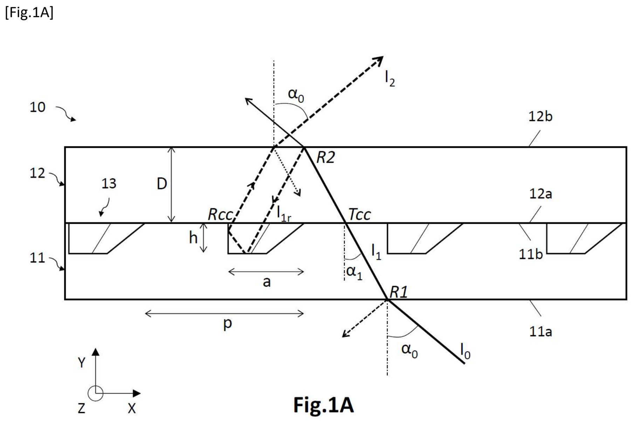

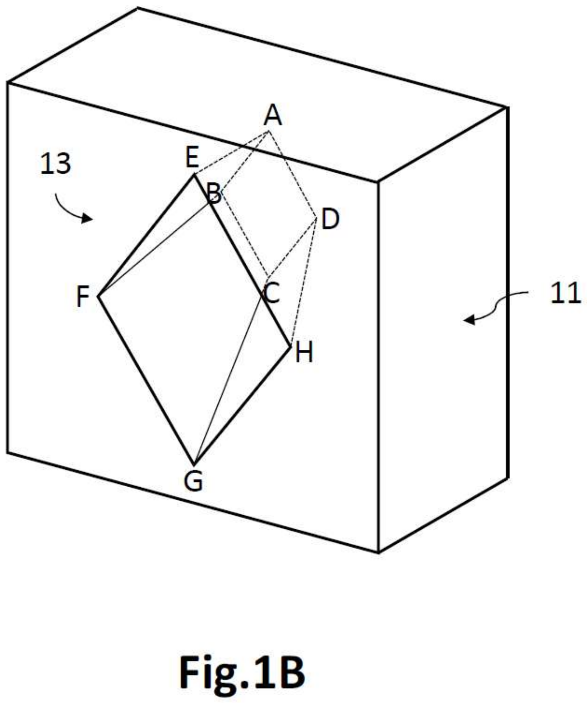

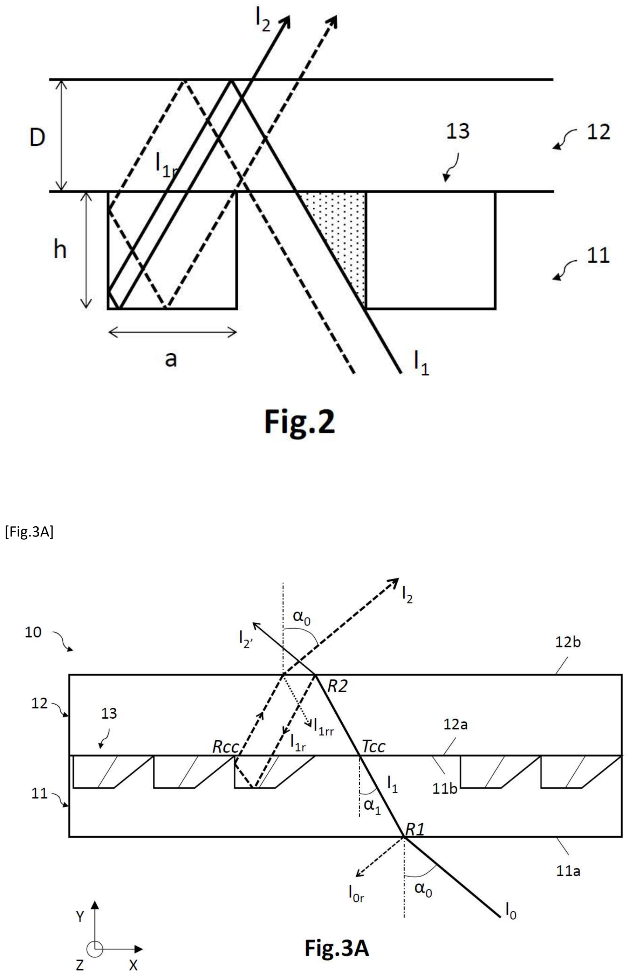

Les figures 1A et 1B illustrent un exemple d'un composant optique 10 qui se distingue des exemples de l'art antérieur mentionnés précédemment en ce que les micro-renfoncements 13 en forme de pyramide tronquée sont orientés vers la face de sortie 12b et non pas, comme dans l'art antérieur, vers la face d'entrée 11a. Il s'agit ici d'introduire la problématique de l'ombre portée mise en évidence plus loin en lien avec la figure 2.

On définit ici et pour la suite de la description un repère direct tridimensionnel orthogonal XYZ, où les axes X et Z forment un plan parallèle au plan moyen (plan principal) du composant optique 10, et où l'axe Y est orienté de la face d'entrée vers la face de sortie 12b. Dans la suite de la description, les termes « avant » et « arrière » s'entendent comme étant relatifs à une orientation suivant la direction +Y.

Le composant optique 10 présente deux faces opposées l'une à l'autre, planes et parallèles au plan principal, dites face d'entrée 11a et face de sortie 12b. Il est destiné à recevoir les rayons lumineux incidents par la face d'entrée 11a (dioptre d'entrée) et à les transmettre par la face de sortie 12b (dioptre de sortie). Il est formé de deux couches transparentes 11, 12 (qui peuvent être des plaques, films, feuilles...) fixées l'une à l'autre. Le plan principal peut être le plan situé à égale distance entre les faces d'entrée 11a et de sortie 12b, être voire le plan situé au niveau de la face arrière 11b de la première couche 11.

La première couche 11 comporte la face d'entrée 11a et une face arrière 11b opposée. Ces faces sont planes et parallèles entre elles. Elle est réalisée en un matériau transparent à la lumière à transmettre. Il peut s'agir d'un matériau plastique, tel que du polyméthacrylate de méthyle. Comme indiqué précédemment, la face d'entrée 11a forme le dioptre d'entrée du composant optique. La face d'entrée 11a peut être revêtue d'une couche minimisant la réflexion R1.

Des micro-renfoncements 13 en forme de pyramide tronquée sont formés dans la couche 11 à partir de la face arrière 11b. Ils forment des échancrures non traversantes réalisées dans la couche 11, et présentent une surface intérieure orientée vers la face arrière 11b et donc vers la deuxième couche 12. Ils sont remplis par la colle transparente, ou par un matériau de remplissage ayant le même indice de réfraction que celui des couches 11, 12 et de la colle.

Les micro-renfoncements 13 sont identiques ou similaires à ceux décrits dans le document WO 2021/104739 A1 ainsi que dans le document de Martinez et al. intitulé Optimized Design and Manufacturing Process of Diffuse Micro Corner Cubes for Head Up Projection Display Applications, Proceedings Volume 12443, Advances in Display Technologies XIII; 124430I (2023).

Les micro-renfoncements 13 sont rétroréfléchissants dans le sens où les rayons réfléchis présentent une direction de réflexion parallèle à la direction d'incidence. Ils sont donc réfléchissants, soit par réflexion totale interne, soit par réflexion de type métallique. Dans le cas d'une réflexion totale interne, l'indice optique du milieu remplissant le micro-renfoncement 13 (et éventuellement celui de la couche 12) est supérieur à celui de la couche 11. Par ailleurs, dans le cas d'une réflexion de type métallique, la face interne de chaque micro-renfoncement est recouverte par une couche mince réfléchissante (non représentée), réalisée par exemple en au moins un matériau métallique. Cette couche mince réfléchissante est présente uniquement dans la surface interne des micro-renfoncements.

Comme l'illustre en détail la fig.1B, chaque micro-renfoncement 13 présente une forme de pyramide tronquée (qui est une forme particulière de coin de cube) à base quadrilatérale. La base de la pyramide tronquée est un quadrilatère EFGH, et la face sommitale de la pyramide tronquée, c'est-à-dire le fond du micro-renfoncement, est le quadrilatère ABCD. La base EFGH est coplanaire avec la face arrière 11b de la couche 11. Le fond ABCD est parallèle au plan principal du composant optique 10. La surface intérieure du micro-renfoncement 13 est ainsi formée d'une part des quatre parois latérales qui joignent la base au fond, et d'autre part du fond ABCD.

Les parois latérales sont les parois ABFE, ADHE, CDHG et BCGF. Ici, les parois latérales ABFE et ADHE sont sensiblement orthogonales entre elles et au fond ABCD (et donc au plan principal P). Le point A est commun à ces parois latérales ABFE et ADHE et au fond ABCD. Ces trois surfaces forment ainsi un trièdre trirectangle, également appelé coin de cube, qui est destiné à assurer la rétroréflexion des rayons lumineux incidents. En revanche, les parois latérales CDHG et BCGF ne sont pas destinées à participer à la rétroréflexion. Elles sont inclinées par rapport au fond ABCD, et forment chacune un angle vis-à-vis de celui-ci supérieur à 90°.

Par ailleurs, la base EFGH et le fond ABCD sont de préférence carrés, et la longueur du côté de la base carrée EFGH est de préférence égale à deux fois la longueur du côté du fond carré ABCD. Ceci permet d'améliorer l'efficacité en rétroréflexion du micro-renfoncement. On note « a » la dimension des diagonales FH et EG. Par ailleurs, on note « h » la profondeur de la pyramide tronquée, c'est-à-dire la distance AE.

Les micro-renfoncements 13 sont agencés ici de manière régulière dans un plan XZ parallèle au plan principal (plan moyen) du composant optique 10, avec un pas p constant. Ils peuvent toutefois être agencés de manière non régulière, par exemple aléatoire ou semi-aléatoire.

Les micro-renfoncements 13 forment donc des portions rétroréfléchissantes, et sont entourés chacun par une portion transparente permettant la transmission de la lumière incidente de la face d'entrée 11a vers la face de sortie 12b. Ainsi, le composant optique 10 est partiellement rétroréfléchissant et partiellement transparent.

La deuxième couche 12 comporte une face avant 12a, par laquelle elle est fixée à la couche 11, et la face de sortie 12b opposée qui forme le dioptre de sortie. Ces faces 12a, 12b sont planes et parallèles entre elles. Elle est réalisée en un matériau transparent à la lumière à transmettre. Il peut s'agir d'un matériau plastique, tel que du polyméthacrylate de méthyle. De préférence, les indices de réfraction des deux couches 11, 12 et de la colle transparente sont sensiblement identiques (ils peuvent toutefois être différents, comme indiqué précédemment, lorsque la réflexion dans les micro-renfoncements 13 est de type réflexion totale interne). La couche 12 présente une épaisseur constante D, formée par la distance entre la face arrière 11b et la face de sortie 12b suivant l'axe Y.

D'autres configurations sont possibles. Ainsi, la deuxième couche 12 peut être formé d'un matériau déposé sur la face arrière 11b de la couche 11, dont le matériau vient remplir continûment l'espace intérieur des micro-renfoncements, et qui présente la face de sortie 12b, plane et parallèle à la face d'entrée 11a.

En fonctionnement, la face d'entrée 11a est éclairée par un faisceau lumineux $I_0$ présentant un angle d'incidence $\alpha_0$ non nul. Le rayon d'intensité $I_0$ est alors réfracté au niveau de la face d'entrée 11a et forme le rayon d'intensité $I_1$. Celui-ci est transmis sans réfraction à l'interface entre les deux couches 11, 12, puis est réfléchi par la face de sortie 12b pour former le rayon d'intensité $I_{1r}$. Celui-ci est alors rétroréfléchi par le micro-renfoncement 13 en forme de pyramide tronquée, puis est réfracté au niveau de la face de sortie 12b pour former le rayon d'intensité $I_2$. Par ailleurs, la lumière ne passant pas par les micro-renfoncements mais passant par les portions transparentes est alors transmise par le composant optique sans être rétroréfléchie.

On note Tu le taux de transmission utile du rayon incident I0 pour obtenir le rayon transmis dévié $I_2$. Il est dit utile dans la mesure où le rayon $I_2$ est celui qui participe à former une image de manière plan-symétrique vis-à-vis de l'objet à imager. On a : Tu = (1-R1)×Tcc×R2×γ×Rcc×(1-R2), où R1 est le taux de réflexion sur la face d'entrée 11a ; Tcc est le taux de transmission entre les micro-renfoncements à l'interface entre les deux couches (il s'agit du taux de couverture spatiale des micro-renfoncements) ; R2 est le taux de réflexion au niveau de la face de sortie 12b ; y est un taux d'éclairement d'un micro-renfoncement par un faisceau lumineux $I_{1r}$ (qui dépend des valeurs de Tcc et de l'épaisseur D ; il s'agit du recouvrement entre le motif complémentaire du micro-renfoncement 13 généré par réflexion sur la face de sortie 12b et le motif du micro-renfoncement 13) ; et Rcc est le taux de rétroréflexion des micro-renfoncements.

A titre d'exemple, pour les valeurs suivantes R1=1% ; Tcc=50% ; R2=50% ; y=100% et Rcc=100%, on obtient un taux de transmission utile de 12.4%, ce qui est comparable aux rendements des systèmes de formation d'image flottante de type Pepper Ghost qui utilisent des lames semi-réfléchissantes.

Notons que le composant optique 10 est configuré, en termes d'épaisseur D de la couche 12 et de dimensions et d'orientation des micro-renfoncements 13, en fonction de l'angle et du plan d'incidence pour bénéficier de l'effet 'coin de cube'. D'une part, les micro-renfoncements 13 sont orientés pour que la diagonale AG soit contenue dans le plan d'incidence des rayons incidents $I_{1r}$. D'autre part, comme l'indiquent les documents Martinez et al 2023 et WO2021/104739A1, la relation qui relie la diagonale a et la profondeur h du micro-renfoncement en pyramide tronquée avec l'angle d'incidence $\alpha_1$ des rayons lumineux $I_{1r}$ est :

$$a = 2h \times \tan\left[\sin^{-1}\left(\frac{1}{n}\sin\alpha_1\right)\right], \text{ où n est l'indice}$$

de réfraction du composant optique.

La figure 2 illustre de manière schématique des micro-renfoncements 13 du composant optique 10 de la fig.1A, dans le but de mettre en évidence la formation de l'ombre portée. Les micro-renfoncements 13 sont représentés ici par simplicité sous forme d'échancrure cubique, mais la problématique est la même avec les pyramides tronquées.

Il ressort du dimensionnement des micro-renfoncements 13 que, pour un angle d'incidence de 45° et un indice optique de 1.5, un micro-renfoncement de $60\mu m$ de profond présente une diagonale de $64\mu m$ environ. Aussi, dans la mesure où, d'une part, les micro-renfoncements sont orientés vers la face de sortie 12b et non plus, comme dans l'art antérieur, vers la face d'entrée 11a, et d'autre part la profondeur et la diagonale présentent des valeurs du même ordre, l'effet d'ombre portée de la pyramide tronquée est présent et n'est pas négligeable. L'ombre portée est ici représentée par la zone en pointillé formée par le rayon $I_1$ en trait continu qui affleure le trièdre de droite.

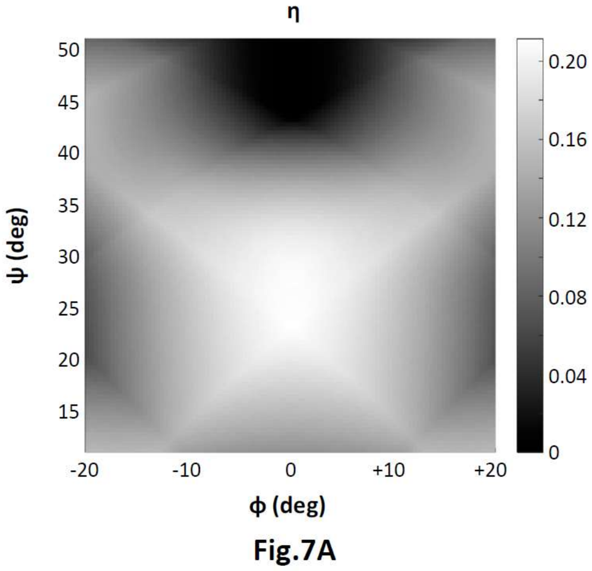

Si l'on note $\eta$ une efficacité de rétroréflexion des rayons $I_1$ (et donc $I_{1r}$) définie par la relation : $\eta = Tcc \times \gamma$, des simulations effectuées par l'inventeur montrent que la valeur théorique de 50% (i.e. avec les valeurs Tcc=50% et y=100% indiquées précédemment) diminue à une valeur effective proche de 25% environ du fait de l'ombre portée (cf. en particulier la fig.7A décrite plus loin). Le taux de transmission utile Tu passe alors de 12% environ à 6% environ.

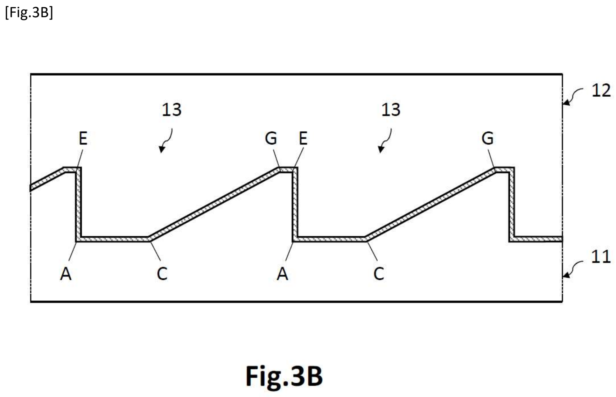

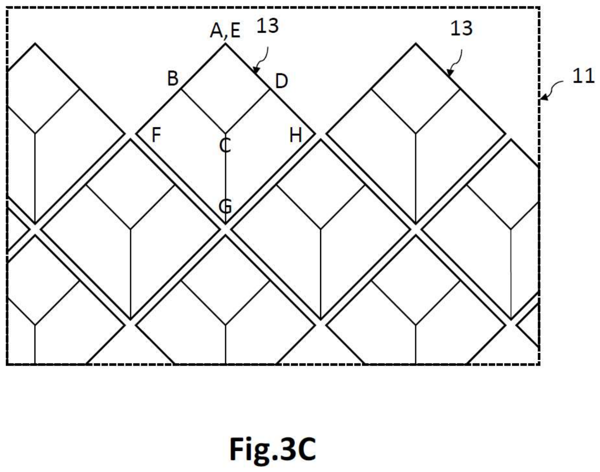

Les figures 3A à 3C illustrent un composant optique 10 selon un mode de réalisation qui présente une efficacité de rétroréflexion $\eta$ des rayons $I_1$ amélioré, et donc un taux de transmission utile Tu amélioré. La fig.3A est une vue schématique et partielle, en coupe transversale, du composant optique 10. La fig.3B illustre plus en détail des micro-renfoncements 13 adjacents de la fig.3A, et la fig.3C est une vue de dessus des micro-renfoncements 13 de la fig.3A.

Selon l'invention, le composant optique 10 est similaire à celui de la fig.1A mais s'en distingue essentiellement en ce que les micro-renfoncements 13 en pyramide tronquée sont agencés de manière à former plusieurs bandes rétroréfléchissantes distinctes et parallèles entre elles, lesquelles sont séparées deux à deux par une région longitudinale transparente qui ne contient pas de micro-renfoncements. Par ailleurs, dans une même bande rétroréfléchissante, les micro-renfoncements sont accolés les uns aux autres (juxtaposés) de manière à éviter la transmission de la lumière provenant de la face d'entrée, et sont orientés suivant un axe transversal de la bande rétroréfléchissante.

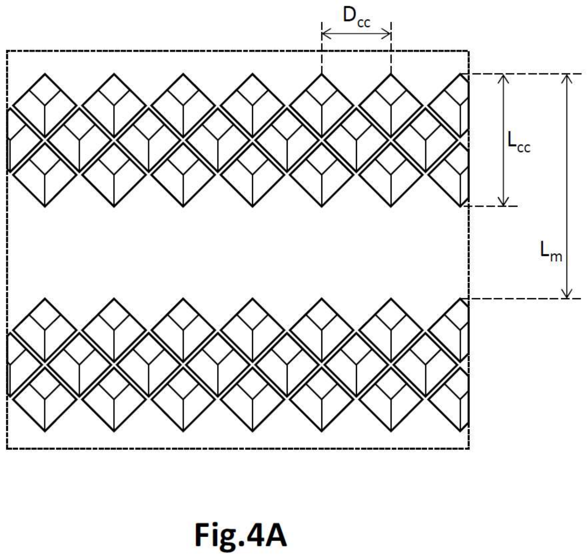

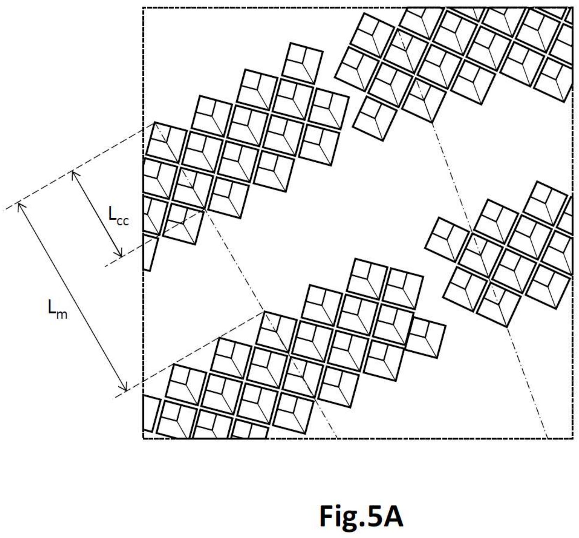

Les bandes rétroréfléchissantes sont formées d'un agencement régulier de micro-renfoncements 13 au pas Dcc suivant l'axe longitudinal, et présentent une largeur Lcc. La largeur Lcc est supérieure à la valeur a de la diagonale AG des micro-renfoncements. Les bandes sont distinctes et parallèles les unes aux autres. Elles sont agencées transversalement avec un pas Lm, qui peut être constant ou non. Deux bandes sont séparées par une région longitudinale transparente qui ne contient pas de micro-renfoncements. Cette région longitudinale transparente présente ainsi une largeur Lm-Lcc. Les dimensions Lcc et Lm sont illustrées sur la fig.4A. Par ailleurs, les bandes sont parallèles entre elles : elles peuvent être rectilignes comme dans la fig.4A ou concentriques comme dans la fig.5A. Enfin, une même bande peut s'étendre longitudinalement de manière continue ou de manière discontinue (par tronçon, comme dans la fig.5A)

De préférence, le pas d'espacement transversal Lm des bandes rétroréfléchissantes est sensiblement égal à 2 fois Lcc : Lm=2×Lcc. Le ratio Lcc/Lm peut toutefois être compris entre 30% et 70%, et de préférence entre 40% et 60% environ. De préférence, il est sensiblement égal à 50%. Par ailleurs, la largeur Lcc est un multiple de la valeur a de la diagonale AG : Lcc=N×a, où N>2. Plus la valeur N est importante, plus l'effet d'ombre portée est limité. Toutefois, la valeur N ne peut être trop élevée au risque pour l'utilisateur de voir les bandes rétroréfléchissantes. A titre d'exemple, si l'on considère une acuité visuelle de 0,5 arcmin et une distance entre le composant optique et l'utilisateur de 0,5m à 1m, on obtient une largeur Lcc des bandes de l'ordre de 70 à 140$\mu$m environ. Avec une dimension a des micro-renfoncements égale à 35$\mu$m environ, la valeur N est alors comprise entre 2 et 4. On peut envisager une dimension a au minimum égale à 10$\mu$m, ce qui permettrait d'avoir un nombre N de l'ordre de 7 à 14 environ. Aussi, de préférence, le nombre N est compris entre 2 et 15.

Les micro-renfoncements 13 sont orientés sensiblement suivant l'axe transversal des bandes rétroréfléchissantes, cet axe transversal étant de préférence compris dans le plan d'incidence du faisceau incident $I_0$. Autrement dit, de préférence, la diagonale AG de chaque micro-renfoncement (diagonale formée par le point commun A du trièdre rétroréfléchissant et le point G opposé) est orientée de manière sensiblement orthogonale à l'axe longitudinal. Ainsi, les micro-renfoncements sont orientés sensiblement suivant le plan d'incidence du faisceau lumineux $I_0$ qui éclaire le composant optique.

Les micro-renfoncements 13 présentent de préférence une base carrée : les diagonales AG et FH présentent ici la même valeur a. Cela permet d'améliorer l'efficacité de rétroréflexion, et permet également d'obtenir un pavage régulier à haute densité qui minimise la surface intermédiaire entre deux micro-renfoncements voisins.

Les micro-renfoncements 13 sont jointifs, i.e. accolés les uns aux autres. La surface intermédiaire entre deux micro-renfoncements voisins est négligeable ou suffisamment faible pour limiter ou éviter totalement la transmission des rayons $I_1$ dans les bandes rétroréfléchissantes. De préférence, la distance transversale de cette surface intermédiaire, définie comme étant la distance entre une bordure de la base EFGH avec celle d'un micro-renfoncement voisin, est inférieure au cinquième, voire au dixième de la profondeur h des micro-renfoncements. Elle peut également être nulle (la bordure d'un micro-renfoncement touche celle du micro-renfoncement voisin).

De préférence, la couche réfléchissante s'étend continument dans la surface d'une même bande rétroréfléchissante, donc sur la surface interne des micro-renfoncements 13, mais également sur la surface intermédiaire (lorsqu'elle est présente) de la face 11b située entre les bordures des bases EFGH des micro-renfoncements 13 voisins.

Par ailleurs, pour favoriser le recouvrement des micro-renfoncements 13 par le faisceau lumineux $I_1$ puis réfléchi par le dioptre de sortie pour former le faisceau $I_{1r}$, la distance Lm et l'épaisseur D sont ajustées en fonction de l'angle d'incidence $\alpha_1$ des rayons $I_1$ par la relation suivante : $D = \dfrac{Lm}{4 \times \tan \alpha_1} \bmod \dfrac{Lm}{2 \times \tan \alpha_1}$, où « mod » est l'opérateur modulo.

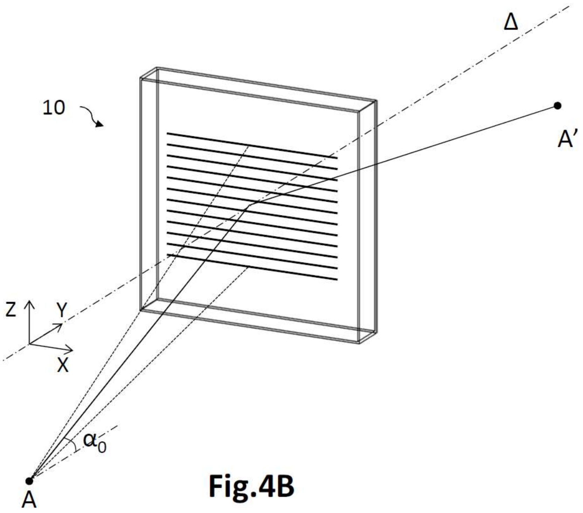

La figure 4A illustre un exemple d'agencement en bandes des micro-renfoncements 13, ici en bandes rectilignes. La figure 4B illustre un exemple de composant optique 10 où les bandes rétroréfléchissantes sont rectilignes. Dans cet exemple, l'objet à imager est décalé vis-à-vis de l'axe optique $\Delta$ du composant optique.

Comme le montre la fig.4A, les bandes rétroréfléchissantes s'étendent ici longitudinalement de manière sensiblement rectiligne. Les micro-renfoncements 13 présentent une base carrée ; les diagonales EG et FH présentent la valeur a. Ici, la distance Dcc est sensiblement égale à la distance a, et la largeur Lcc est ici sensiblement égale à 2 fois la distance a. Par ailleurs, le pas d'agencement transversal des bandes rétroréfléchissantes Lm est égal à 2 fois la largeur Lcc. D'autres agencements des micro-renfoncements sont possibles, où ils sont tous orientés de la même manière et présentent les mêmes dimensions.

Comme le montre la fig.4B, un composant optique 10 qui présente un tel agencement des bandes micro-réfléchissantes peut être utilisé comme système optique imageant présentant une transmission plan-symétrique. Il forme ainsi le point image A' à partir des rayons lumineux provenant du point objet A. A la différence des lentilles conventionnelles, le composant optique 10 dévie et fait converger les rayons de manière plan-symétrique vis-à-vis du plan principal (plan moyen) du composant optique. Ainsi, pour un point A contenu dans le plan YZ et distant de l'axe optique d'une valeur donnée, le point image A' est également contenu dans le même plan YZ et est distant de la même valeur et suivant la même direction vis-à-vis de l'axe optique que le point A. Le point A' présente donc une symétrie planaire avec le point A.

On remarque que le faisceau lumineux $I_0$ présente un angle d'incidence compris entre $\alpha_0 - \delta\alpha$ et $\alpha_0 + \delta\alpha$, de sorte que les bandes supérieures reçoivent les rayons avec un angle d'incidence $\alpha_0 + \delta\alpha$, les bandes médianes reçoivent les rayons avec un angle $\alpha_0$, et les bandes inférieures avec un angle $\alpha_0 - \delta\alpha$. On peut dimensionner les micro-renfoncements de toutes les bandes en fonction du même angle d'incidence moyen $\alpha_0$, ou dimensionner les bandes en fonction de l'angle d'incidence local (donc, par exemple, les bandes supérieures en fonction de $\alpha_0 + \delta\alpha$, les bandes médianes en fonction de $\alpha_0$, et les bandes inférieures en fonction de $\alpha_0 - \delta\alpha$). De préférence, les micro-renfoncements d'une même bande présentent la même orientation transversale (i.e. dans le plan parallèle au plan d'incidence YZ passant par A). De préférence, les micro-renfoncements présentent la même orientation d'une bande rétroréfléchissante à l'autre.

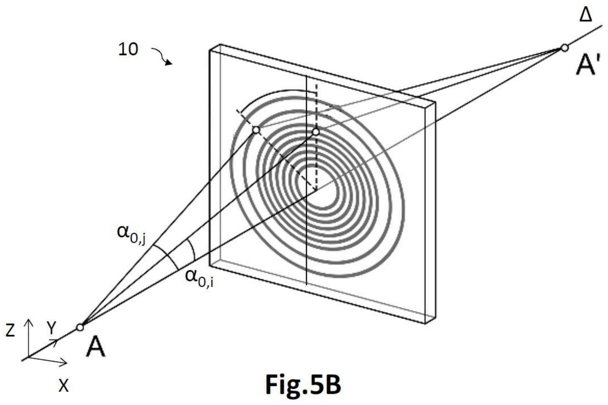

La figure 5A illustre un autre exemple d'agencement en bandes des micro-renfoncements 13, ici en cercles concentriques. La figure 5B illustre un exemple de composant optique où les bandes rétroréfléchissantes présentent un tel agencement. Dans cet exemple, l'objet à imager se trouve sur l'axe optique $\Delta$ du composant optique 10.

Comme le montre la fig.5A, les bandes rétroréfléchissantes s'étendent de manière sensiblement circulaire et concentrique, en étant centrées sur l'axe optique $\Delta$. Chaque bande forme donc un anneau dans le plan principal du composant optique. Ici, l'orientation des micro-renfoncements est uniforme par tronçon de bande. Ainsi, chaque bande est formée de plusieurs tronçons longitudinaux qui s'étendent de manière rectiligne et où les micro-renfoncements d'un même tronçon présentent une même orientation. L'orientation des micro-renfoncements 13 dépend donc du plan d'incidence moyen correspondant. Ainsi, une même bande est formée de M tronçons distincts inclinés vis-à-vis d'un axe vertical parallèle à l'axe Z et passant par l'axe central d'un angle $\beta_i$, avec i allant de 1 à M. La fig.5A illustre un tronçon incliné de l'angle $\beta_i$ ainsi que le tronçon adjacent incliné de l'angle $\beta_{i+1}$. La valeur M est suffisamment grande pour limiter l'espacement entre deux tronçons voisins d'une même bande rétroréfléchissante d'une part, et pour que les bandes restent sensiblement circulaires.

Comme dans l'exemple de la fig.4B, le composant optique 10 peut être utilisé comme une optique imageante plan-symétrique. En effet, l'image A' du point A est située sur l'axe optique à la même distance du composant optique que le point A, quelle que soit la position de ce dernier. Le composant optique est donc plan-symétrique, à la différence d'une lentille conventionnelle.

Chaque bande rétroréfléchissante est formée de tronçons rectilignes approximant un cercle. Les cercles ainsi approximés sont sensiblement concentriques et centrés sur l'axe optique $\Delta$. En d'autres termes, chaque cercle est approximé par un polygone, de préférence régulier et chaque tronçon est centré sur un côté de ce polygone.

Comme cela est représenté en figure 5A, les anneaux constitués par deux bandes rétroréfléchissantes voisines sont séparés par une portion longitudinale transparente ne comportant pas de micro-renfoncements. Cette portion longitudinale transparente se prolonge dans les espacements entre tronçons voisins de la bandes rétroréfléchissantes de plus grand diamètre. Ainsi, l'espacement entre deux tronçons voisins d'une même bande rétroréfléchissante ne fait pas partie de cette dernière.

De préférence, comme c'est le cas ici, l'espacement entre deux tronçons voisins d'une même bande rétroréfléchissante est tel qu'il n'est pas possible d'y insérer un micro-renfoncement qui serait accolé à un micro-renfoncement de l'un ou l'autre des tronçons voisins. Plus M est grand et plus la distance entre tronçons voisins est réduite.

Sur la figure 5A, on a représenté en traits mixtes l'axe transversale d'une bande rétroréfléchissante au niveau de deux tronçons voisins de celle-ci. De préférence, le plan dans lequel s'étendent les bandes rétroréfléchissantes, est découpé en secteurs angulaires tels qu'à l'intérieur d'un même secteur angulaire, les tronçons appartenant aux différentes bandes sont parallèles entre eux. En d'autres termes, dans un même secteur angulaire, l'axe transversale d'une bande rétroréfléchissante est parallèle aux axes transversaux des autres bandes réfléchissantes. Au niveau de chaque tronçon d'une bande rétroréfléchissante, son axe transversal passe de préférence sensiblement par le centre de tous les cercles approximés par les bandes rétroréfléchissantes.

Dans la mesure où les rayons émis du point A présentent différents angles d'incidence, allant de 0° à $\alpha_{0,max}$, les micro-renfoncements 13 sont de préférence dimensionnés en fonction de l'angle d'incidence correspondant. Ainsi, à titre d'exemple, pour une profondeur h de $60\,\mu m$ et un indice optique n de 1.5 du matériau transparent, les micro-renfoncements 13 de la bande située à proximité de l'axe optique peuvent présenter une dimension a de $15\,\mu m$ environ (pour un angle d'incidence de 10° environ), alors que ceux de la bande la plus éloignée de l'axe optique peut présenter une dimension a de $100\,\mu m$ environ (pour un angle d'incidence de 60° environ).

A ce titre, notons $\alpha_0$ l'angle d'incidence des rayons $I_0$ qui balaie les valeurs allant de 0° à $\alpha_{0,max}$. On note i le rang des bandes concentriques, avec i=1 pour la bande la plus proche de l'axe optique $\Delta$ et i=P pour la bande la plus éloignée. Chaque bande peut alors être située entre les angles d'incidence $\alpha_{0,i}$ et $\alpha_{0,i+1}$. La dimension a des diagonales des micro-renfoncements de la bande de rang i peut alors vérifier la relation :

$$a_i = 2h \times \tan\left[\sin^{-1}\left(\frac{1}{n}\sin\overline{\alpha_{1,1}}\right)\right] \text{, avec : } \overline{\alpha_{1,i}} = (\alpha_{1,i+1} + \alpha_{1,i})/2.$$

Par ailleurs, l'épaisseur D de la couche 12 peut être choisie sensiblement égale N fois h : D = N×h. Rappelons que N est le nombre de micro-renfoncements 13 suivant la largeur de la bande considérée, et que h est la profondeur des micro-renfoncements 13. Par ailleurs, entre les angles $\alpha_{1,i}$ et $\alpha_{1,i+1}$, plusieurs bandes concentriques peuvent être présentes. On peut calculer le nombre $Nb_i$ des bandes présentes dans l'incrément angulaire $\alpha_{1,i+1}$ - $\alpha_{1,i}$ par la relation :

$$Nb_i = Z \times \frac{\tan \alpha_{0,i+1} - \tan \alpha_{0,i}}{4 \times \tan \overline{\alpha_{1,i}}}$$, où Z est la distance entre l'objet à imager et le composant optique suivant l'axe optique. A titre d'exemple, pour une profondeur h de $45 \mu m$ et un nombre N de 4, une distance Z de 10cm, et un incrément angulaire de 2°, et enfin pour une valeur minimale de la dimension a de $5 \mu m$, on observe que la valeur a augmente linéairement de $5 \mu m$ à $60 \mu m$ alors que $\alpha_0$ passe de 5° à 60°, et que le nombre Nb décroît de 44 bandes pour $\alpha_0$ = 5° (donc 44 bandes de micro-renfoncements de $5 \mu m$) à 9 bandes autour de 40° où les micro-renfoncements présentent une dimension a de $40 \mu m$ environ.

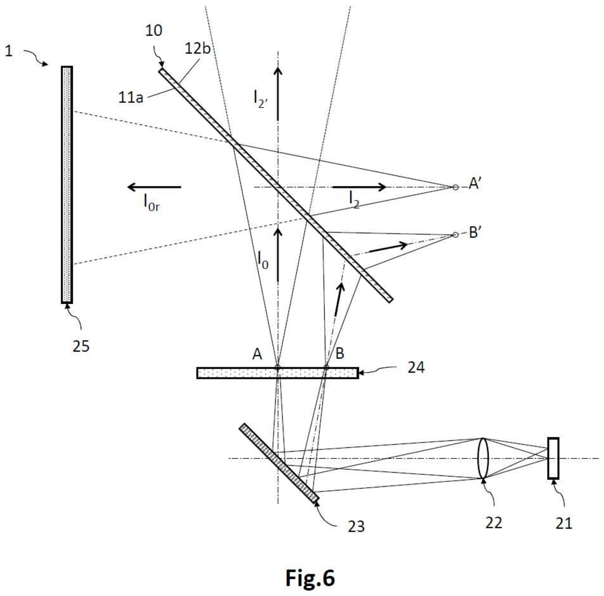

La figure 6 illustre un système d'imagerie flottante 1 qui comporte un composant de formation d'image et un composant optique 10 selon un mode de réalisation.

Le composant de formation d'image comporte ici un projecteur 21, 22 d'une image à afficher, un miroir de renvoi 23, et une structure transparente et diffusante 24. Il est associé au composant optique 10, et ici, une structure absorbante 25. Le projecteur comporte une source d'image 21 (écran affichant l'image) associée à une optique de projection 22. En variante, le composant de formation d'image peut être un écran (moins efficace d'un point de vue énergétique (émission lambertienne, diffusion élevée) mais aussi moins encombrant (le diffuseur y est intégré)).

L'image affichée par la source 21 est ainsi projetée sur une structure transparente et diffusante 24 par l'optique de projection 22 et le miroir de renvoi 23. L'image diffusée par la structure diffusante 24 comporte notamment les points A et B. Les faisceaux lumineux provenant de l'image diffusée sont notés $I_0$, en référence à la fig.3A.

Les rayons $I_0$ de l'image diffusée par la structure diffusante 24 sont incidents sur la face d'entrée 11a du composant optique 10. Une partie de ces rayons, notée $I_{0r}$, est réfléchie par cette face d'entrée 11a, puis sont absorbés par la structure absorbante 25.

Une autre partie, notée $I_{2'}$, est réfractée et transmise au travers des régions longitudinales transparentes du composant optique 10. Ils ressortent hors du composant optique par la face de sortie 12b avec le même angle d'incidence que les rayons $I_0$.

En revanche, une partie $I_2$ des rayons $I_0$ est réfléchie par la face de sortie 12b vers les micro-renfoncements, puis est rétroréfléchie par les bandes rétroréfléchissantes à micro-renfoncements, et enfin réfractés hors du composant optique 10 au travers de la face de sortie 12b. Ils convergent ensuite pour former les points images A' et B', lesquels sont placés selon une symétrie planaire vis-à-vis du plan principal du composant optique 10.

Ainsi, le composant optique 10 sépare l'espace inférieur de génération de l'image à visualiser et l'espace supérieur de visualisation de l'image. Ce système d'imagerie flottante 1 permet de limiter l'effet de réplication fantôme qui est présent dans le cas où le système d'imagerie flottante comporterait une lame semi-réfléchissante à la place de notre composant optique ainsi qu'une surface rétroréfléchissante à coins de cube à la place de notre absorbeur. Un tel système est décrit notamment dans l'article de Yoshimizu & Iwase intitulé Radially arranged dihedral corner reflector array for wide viewing angle of floating image without virtual image, Opt. Express 27(2), 918-927 (2019). De plus, l'image visualisée est moins floue que dans cet exemple de l'art antérieur dans la mesure où elle est située plus proche du système d'imagerie flottante que dans les exemples de l'art antérieur.

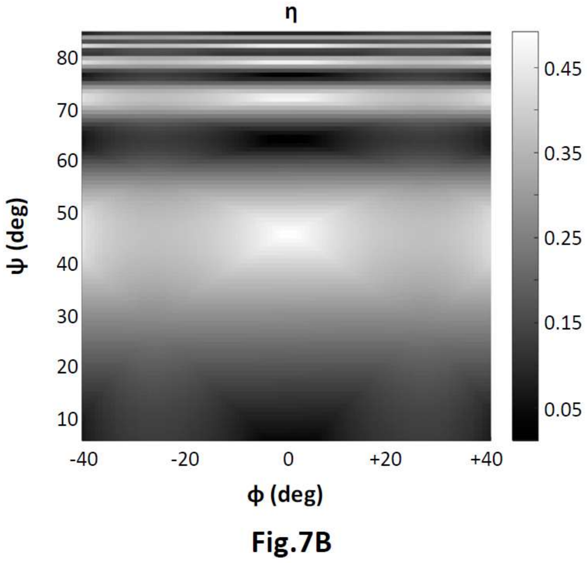

Les figures 7A et 7B illustrent des exemples d'évolution angulaire de l'efficacité de rétrodiffusion $\eta$ des rayons $I_1$ et donc également des rayons $I_{1r}$. La valeur de l'efficacité $\eta$ est relative à un composant optique 10 d'un système d'imagerie flottante similaire à celui de la fig.6, dans le cas où l'utilisateur aurait les yeux situés dans la boîte à œil du système. L'angle de vision $\phi$ est celui qui balaie le plan horizontal XY et l'angle de vision $\psi$ est celui qui balaie le plan vertical YZ. Ces évolutions angulaires sont obtenues par simulation numérique au moyen du logiciel Matlab® en tenant compte des effets d'ombre portée par un ensemble de relations géométriques.

La fig.7A correspond au cas où le composant optique est similaire à celui de la fig.1A, c'est-à-dire où les micro-renfoncements ne sont pas agencés en bandes rétroréfléchissantes distinctes et ne sont pas accolés les uns aux autres. Il apparaît que l'efficacité $\eta$ présente une valeur maximale de l'ordre, ici, de 20% environ, en cohérence avec la valeur théorique maximale de 25% indiquée précédemment. Cette dégradation de l'efficacité $\eta$ est due, comme nous l'avons montré plus haut, à un effet d'ombre portée.

La fig.7B correspond au cas où le composant optique est similaire à celui de la fig.3A, c'est-à-dire où les micro-renfoncements sont agencés en bandes rétroréfléchissantes distinctes en y étant accolés les uns aux autres. Il apparaît que l'efficacité $\eta$ présente une valeur maximale de l'ordre, ici, de 45% environ. Comme nous l'avons montré précédemment, cet agencement permet de limiter l'effet d'ombre portée, ce qui permet à l'efficacité $\eta$ de se rapprocher de la valeur théorique maximale de 50%. Cette amélioration sensible de l'efficacité $\eta$ se traduit de facto par une amélioration du taux de transmission utile Tu, ce qui améliore les performances du composant optique et donc du système d'imagerie flottante.

Par ailleurs, on note que l'efficacité $\eta$ est meilleure lorsque le pas Dcc est le plus faible possible, c'est-à-dire lorsqu'il correspond à celui de la fig.4A où Dcc est égal à la valeur a de la diagonale FH. En effet, elle présente une valeur élevée pour une large gamme angulaire de 15° de l'angle horizontal φ.

Des modes de réalisation particuliers viennent d'être décrits. Différentes variantes et modifications apparaîtront à l'homme du métier.

**Revendications**

1. Composant optique (10), s'étendant dans un plan principal (P), et présentant une face d'entrée (11a) et une face de sortie (12b) opposée, planes et parallèles au plan principal (P), comportant :

   o une première couche (11) transparente, présentant la face d'entrée (11a), et une deuxième face (11b) opposée, plane et parallèle au plan principal (P), et comportant des micro-renforcements (13) rétroréfléchissants, en forme de pyramide tronquée, s'étendant à partir de la deuxième face (11b) ;
   o une deuxième couche (20) transparente, présentant la face de sortie (12b), et s'étendant sur et au contact de la deuxième face (11b) de la première couche (11) et des micro-renforcements (13) ;
   o **caractérisé en ce que** :

   • les micro-renforcements (13) sont agencés en bandes rétroréfléchissantes distinctes et parallèles les unes aux autres, les bandes rétroréfléchissantes étant séparées deux à deux par une portion longitudinale transparente ne comportant pas de micro-renforcements,
   • les micro-renforcements (13) d'une même bande rétroréfléchissante étant accolés les uns aux autres et orientés suivant un axe transversal de la bande rétroréfléchissante.

2. Composant optique (10) selon la revendication 1, dans lequel les micro-renforcements (13) d'une même bande présentent tous les mêmes dimensions.

3. Composant optique (10) selon la revendication 1 ou 2, dans lequel les micro-renforcements (13) présentent chacun une face sommitale (ABCD) carrée de la pyramide tronquée et une base (EFGH) carrée, parallèle à la face sommitale et coplanaire avec la deuxième face (11b) de la première couche (11).

4. Composant optique (10) selon la revendication 3, dans lequel les micro-renforcements (13) présentent chacun un trièdre formé de la face sommitale (ABCD) et de deux faces latérales (AEFB ; EAHD) orthogonales entre elles et avec la face sommitale (ABCD).

5. Composant optique (10) selon la revendication 4, dans lequel les micro-renforcements (13) présentent chacun une première diagonale (AG) reliant un point commun (A) commun à la face sommitale (ABCD) et aux deux faces latérales (AEFB ; EAHD) du trièdre, au point opposé (G) de la base, cette diagonale étant sensiblement orientée suivant l'axe transversal de la bande rétroréfléchissante.

6. Composant optique (10) selon la revendication 5, dans lequel, dans une même bande rétroréfléchissante, les micro-renforcements (13) sont agencés périodiquement selon un pas (Dcc) sensiblement égal à la dimension d'une diagonale (FH) de la base orthogonale à la première diagonale (AG).

7. Composant optique (10) selon l'une quelconque des revendications 1 à 6, dans lequel une couche réfléchissante recouvre la surface interne des micro-renforcements (13) ainsi qu'une surface intermédiaire de la deuxième face (11b) de la première couche (11) située entre deux micro-renforcements (13) voisins.

8. Composant optique (10) selon l'une quelconque des revendications 1 à 7, dans lequel les bandes rétroréfléchissantes sont rectilignes ou concentriques.

9. Composant optique (10) selon l'une quelconque des revendications 1 à 8, dans lequel chaque bande rétroréfléchissante comprend, suivant son axe transversal, entre 2 et 15 micro-renforcements.

10. Composant optique (10) selon l'une quelconque des revendications 1 à 9, dont la face d'entrée (11a) est destinée à être éclairée par un faisceau lumineux avec un angle d'incidence moyen $\alpha_0$ non nul, lequel est réfracté pour former dans un faisceau lumineux présentant un angle $\alpha_1$ non nul vis-à-vis d'un axe orthogonal au plan principal ; dans lequel les bandes rétroréfléchissantes sont agencées les unes à côté des côtés au pas Lm et dans lequel la deuxième couche (12) présente une épaisseur D ; les valeurs D et Lm étant choisies pour vérifier la relation :

$$D = \frac{Lm}{4 \times \tan \alpha_1} \bmod \frac{Lm}{2 \times \tan \alpha_1}.$$

11. Composant optique (10) selon l'une quelconque des revendications 1 à 10, dans lequel deux micro-renfoncements voisins d'une même bande rétroréfléchissante sont espacés l'un de l'autre d'une distance au plus égale à cinquième de leur profondeur (h) et de préférence au plus égale à dixième de leur profondeur (h).

**12.** Système d'imagerie flottante (1), comportant :

> o un composant de formation d'image, adapté à fournir une image ;
> o le composant optique (10) selon l'une quelconque des revendications précédentes, sa face d'entrée (11a) étant orientée vers le composant de formation d'image et disposée de manière inclinée à un axe optique de ce dernier.

**13.** Système d'imagerie flottante (1) selon la revendication 12, comportant une structure absorbante (25) située en face de la face d'entrée (11a) du composant optique (10) de manière à recevoir les faisceaux lumineux provenant du composant de formation d'image et réfléchi par la face d'entrée (11a).

**14.** Système d'imagerie flottante (1) selon la revendication 12 ou 13, dans lequel le composant de formation d'image comporte : un projecteur d'une image, comportant une source d'image (21) et un système optique (22) ; et un diffuseur transparent (24), situé dans le plan image du système optique (22), adapté à transmettre et diffuser l'image reçue du projecteur.

[Fig.1A]

**Fig.1A**

**Fig.1B**

**Fig.2**

[Fig.3A]

**Fig.3A**

[Fig.3B]

**Fig.3B**

**Fig.3C**

**Fig.4A**

**Fig.4B**

**Fig.5A**

Fig.5B

**Fig.6**

**η**

**Fig.7A**

**Fig.7B**

Europäisches
Patentamt

European
Patent Office

Office européen
des brevets

# RAPPORT DE RECHERCHE EUROPEENNE

**Numéro de la demande**

EP 25 21 0454

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | MARTINEZ CHRISTOPHE ET AL: "Optimized design and manufacturing process of diffuse micro corner cubes for head up projection display applications", 20230314, vol. 12443, 14 mars 2023 (2023-03-14), pages 124430I-124430I, XP060175289, ISSN: 0277-786X, DOI: 10.1117/12.2649947 ISBN: 978-1-5106-5991-9 * le document en entier * | 1-14 | INV. G02B5/124 G03B21/60 |
| A | MARTINEZ CHRISTOPHE ET AL: "Multi-user volumetric 360° display based on retro-reflective transparent surfaces", OPTICS EXPRESS , vol. 28, no. 26 15 décembre 2020 (2020-12-15), page 39524, XP093269590, US ISSN: 1094-4087, DOI: 10.1364/OE.409181 Extrait de l'Internet: URL:https://opg.optica.org/directpdfaccess /76715f5a-4c72-4d21-b4d668d51dec3e45_44479 9/oe-28-26-39524.pdf * le document en entier * | 1-14 | |
| A | WO 2018/069625 A1 (COMMISSARIAT ENERGIE ATOMIQUE [FR]) 19 avril 2018 (2018-04-19) * alinéa [0056] * | 1-14 | |
| A | WO 2021/104739 A1 (COMMISSARIAT ENERGIE ATOMIQUE [FR]) 3 juin 2021 (2021-06-03) * le document en entier * | 1-14 | |
| A | US 2017/197338 A1 (MARTINEZ CHRISTOPHE [FR] ET AL) 13 juillet 2017 (2017-07-13) * le document en entier * | 1-14 | |

**DOMAINES TECHNIQUES RECHERCHES (IPC)**

G02B
G03D
G03B

Le présent rapport a été établi pour toutes les revendications

| Lieu de la recherche | Date d'achèvement de la recherche | Examinateur |
|---|---|---|
| Munich | 20 novembre 2025 | Gentile, Mathieu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 21 0454

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-11-2025

| Document brevet cité au rapport de recherche | Date de publication | Membre(s) de la famille de brevet(s) | Date de publication |
|---|---|---|---|
| WO 2018069625 A1 | 19-04-2018 | EP 3526965 A1 | 21-08-2019 |
| | | FR 3057731 A1 | 20-04-2018 |
| | | JP 6987855 B2 | 05-01-2022 |
| | | JP 2019533829 A | 21-11-2019 |
| | | US 2019235375 A1 | 01-08-2019 |
| | | WO 2018069625 A1 | 19-04-2018 |
| WO 2021104739 A1 | 03-06-2021 | CN 115004105 A | 02-09-2022 |
| | | EP 4066057 A1 | 05-10-2022 |
| | | EP 4170426 A1 | 26-04-2023 |
| | | FR 3103575 A1 | 28-05-2021 |
| | | US 2022413193 A1 | 29-12-2022 |
| | | WO 2021104739 A1 | 03-06-2021 |
| US 2017197338 A1 | 13-07-2017 | EP 3192645 A1 | 19-07-2017 |
| | | FR 3046682 A1 | 14-07-2017 |
| | | US 2017197338 A1 | 13-07-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- WO 2018069625 A1
- EP 3141952 A1
- WO 2021104739 A1

**Littérature non-brevet citée dans la description**

- **MARTINEZ et al.** Optimized Design and Manufacturing Process of Diffuse Micro Corner Cubes for Head Up Projection Display Applications. *Advances in Display Technologies*, 2023, vol. 12443

- **YOSHIMIZU** ; **IWASE**. Radially arranged dihedral corner reflector array for wide viewing angle of floating image without virtual image. *Opt. Express*, 2019, vol. 27 (2), 918-927